# EUROPÄISCHE PATENTSCHRIFT

(11) **EP 3 302 924 B1**
(45) Veröffentlichungstag und Bekanntmachung des Hinweises auf die Patenterteilung: **04.10.2023**
(21) Anmeldenummer: 16723698.3
(22) Anmeldetag: 10.05.2016
(51) Int. Cl.: B29C 48/27, B29C 48/285, B29C 48/92, B29B 7/60, B29C 31/02, B29C 48/25

(54) **VERFAHREN FÜR DIE VORBEREITUNG EINES MATERIALWECHSELS BEI EINER EXTRUSIONSVORRICHTUNG FÜR EINE FOLIENMASCHINE**
METHOD FOR PREPARING FOR A CHANGE OF MATERIAL IN AN EXTRUSION DEVICE FOR A FILM MACHINE
PROCÉDÉ DE PRÉPARATION D'UN CHANGEMENT DE MATIÈRE DANS UN DISPOSITIF D'EXTRUSION POUR UNE LIGNE DE PRODUCTION DE FILMS

(30) Priorität: 08.06.2015 DE 102015108974
(43) Veröffentlichungstag der Anmeldung: 11.04.2018
(73) Patentinhaber: Windmöller & Hölscher KG, 49525 Lengerich (DE)
(72) Erfinder: AVERMEYER, Ansgar, 49124 Georgsmarienhütte (DE); KULGEMEYER, Tobias, 49170 Hagen a.T.W. (DE)
(86) Internationale Anmeldenummer: PCT/EP2016/060442
(87) Internationale Veröffentlichungsnummer: WO 2016/198221

(56) Entgegenhaltungen:
- EP-A1- 0 899 079
- EP-A2- 0 394 869
- DE-A1- 10 018 321
- DE-A1-102013 100 812
- DE-U1-202004 015 743
- JP-A- S62 257 816

## Beschreibung

Die vorliegende Erfindung betrifft ein Verfahren für die Vorbereitung eines Materialwechsels bei einer Extrusionsvorrichtung für eine Folienmaschine sowie eine entsprechende Extrusionsvorrichtung mit der Möglichkeit zur Durchführung eines derartigen Verfahrens.

Es ist grundsätzlich bekannt, dass bei Extrusionsvorrichtungen für Folienmaschinen Materialwechsel durchgeführt werden sollen. So sind beispielsweise unterschiedliche Produkte auf einer Folienmaschine produzierbar, welche sich insbesondere hinsichtlich ihrer eingesetzten Rezepturen und damit ihrer eingesetzten Materialzusammensetzungen, unterscheiden. Um unterschiedliche Materialzusammensetzungen auf einer Produktionsmaschine fahren zu können, müssen die unterschiedlichen Einsatzmaterialien angepasst werden bzw. gewechselt werden. Mit anderen Worten kann ein Materialwechsel durchgeführt werden zwischen den Materialien einer Einsatzrezeptur und den Materialien einer Folgerezeptur.

Nachteilhaft bei den bekannten Lösungen ist es, dass zum Auftragsende, also wenn die gewünschte Menge an Produkten eines Einsatzmaterials bzw. einer Einsatzrezeptur gefertigt worden ist, der Materialwechsel durchgeführt wird. Zu diesem Zeitpunkt befindet sich in einer Extrusionsvorrichtung das jeweilige Einsatzmaterial in einer Vorlagevorrichtung zur Vorlage von diesem Einsatzmaterial für den Extruder. Um den Materialwechsel durchführen zu können, muss nun das Einsatzmaterial aus dieser Vorlagevorrichtung manuell abgelassen werden und durch das nachfolgende Einsatzmaterial, welches zu diesem Zeitpunkt als Folgematerial bezeichnet werden kann, ersetzt werden. Dies führt dazu, dass die gesamte Materialmenge an Einsatzmaterial, welches sich zu diesem Zeitpunkt noch in der Vorlagevorrichtung befindet, abgelassen werden muss und als Abfall gewertet wird. Darüber hinaus ist das Ablassen des Einsatzmaterials aus der Vorlagevorrichtung ein zeitaufwendiger Prozess, da abgewartet werden muss, bis die gesamte Menge an Einsatzmaterial aus der Vorlagevorrichtung, insbesondere durch Schwerkraftförderung, abgeflossen ist.

Die Schrift DE 10 2013 100 812 A1 offenbart ein Verfahren für ein Materialwechsel bei einer Extrusionsvorrichtung für eine Folienmaschine, wobei die Extrusionsvorrichtung zumindest eine Vorlagevorrichtung aufweist. Die Schrift EP 0 394 869 A2 weist eine Extrusionsvorrichtung mit einem Extruder und zumindest einer Vorlagevorrichtung auf.

Es ist Aufgabe der vorliegenden Erfindung, die voranstehend beschriebenen Nachteile zumindest teilweise zu beheben. Insbesondere ist es Aufgabe der vorliegenden Erfindung, in kostengünstiger und einfacher Weise die Zeit für den Materialwechsel zu reduzieren und bevorzugt auch die Abfallmenge zu verringern.

Voranstehende Aufgabe wird gelöst durch ein Verfahren mit den Merkmalen des Anspruchs 1 sowie eine Extrusionsvorrichtung mit den Merkmalen des Anspruchs 9. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit der erfindungsgemäßen Extrusionsvorrichtung und jeweils umgekehrt, so dass bezüglich der Offenbarung zu den einzelnen Erfindungsaspekten stets wechselseitig Bezug genommen wird bzw. werden kann.

Ein erfindungsgemäßes Verfahren dient der Vorbereitung eines Materialwechsels bei einer Extrusionsvorrichtung für eine Folienmaschine. Eine solche Extrusionsvorrichtung ist mit zumindest einer Vorlagevorrichtung zur Vorlage von Einsatzmaterial für einen Extruder ausgestattet. Das erfindungsgemäße Verfahren weist die folgenden Schritte auf:
- Vorausbestimmen eines Endes eines Produktionsauftrages einer Extrusionsvorrichtung,
- Vorgeben eines reduzierten Wechselfüllstandes für die zumindest eine Vorlagevorrichtung,
- Halten des Füllstandes der zumindest einen Vorlagevorrichtung auf dem reduzierten Wechselfüllstand für die weitere Produktion mit der Extrusionsvorrichtung.

Erfindungsgemäß wird also nun der Produktionsauftrag überwacht und hinsichtlich eines zu erwartenden Endes vorausbestimmt. Dies kann zum Beispiel durch die Berechnung der Restlaufzeit auf Basis der Restmenge des Produktionsauftrages erfolgen. Jedoch ist es auch denkbar, dass das Vorausbestimmen eine manuelle Eingabe des Bedienpersonals der Extrusionsvorrichtung beinhaltet. Auf diese Weise ist nun eine Kontrolleinheit einer Extrusionsvorrichtung, auf welcher ein erfindungsgemäßes Verfahren ausgeführt werden kann, in der Lage, das Ende eines Produktionsauftrages zu erkennen und der weiteren Regelung des Prozesses zugrunde zu legen. Unter dem Produktionsauftrag ist dabei insbesondere zu verstehen, dass während des Produktionsauftrages ein verkaufsfertiges Produkt einer Folie produziert wird. Der Produktionsauftrag ist dabei zu unterscheiden von dem Zwischenzeitraum bzw. dem Wechselzeitraum zwischen zwei Produktionsaufträgen, in welchem noch nicht die Folgerezeptur produziert wird und auch nicht mehr die Einsatzrezeptur sich im Prozess befindet. Dieser Wechselzeitraum führt also zu einem Ausschussmaterial, welches nicht als verkaufsfertiges Produkt bezeichnet werden kann. Erkennt nun eine Kontrolleinheit bei der Ausführung eines erfindungsgemäßen Verfahrens das Ende eines Produktionsauftrages, so kann auf dieser Basis die Vorgabe eines reduzierten Wechselfüllstandes für die zumindest eine Vorlagevorrichtung erfolgen. Ein Wechselfüllstand ist dabei insbesondere reduziert mit Bezug auf den regulären Betriebsfüllstand innerhalb der jeweiligen Vorlagevorrichtung. Um sicherzustellen, dass im laufenden Betrieb eine Extrusionsvorrichtung die Gefahr des Leerlaufens des Extruders auf ein Minimum reduziert wird, sind üblicherweise relativ große Mengen an Einsatzmaterial in der Vorlagevorrichtung mit einer dementsprechend großen Pufferwirkung vorgehalten. Dies verhindert, dass auch bei mechanischen Fehlfunktionen einer Zuführvorrichtung in die Vorlagevorrichtung ein Leerlaufen des Extruders erfolgt. Sobald das Produktionsende bzw. das Ende des Produktionsauftrages vorausbestimmt worden ist, kann jedoch nun ein reduzierter Wechselfüllstand vorgegeben werden. Dies führt also dazu, dass der Füllstand innerhalb der jeweiligen Vorlagevorrichtung über die Zeit der weiteren Produktion absinkt, bis der zugehörige Wechselfüllstand, als reduzierter Wechselfüllstand bezogen auf den Betriebsfüllstand, erreicht wird. Erfindungsgemäß erfolgt nun das Halten dieses Füllstandes der zumindest einen Vorlagevorrichtung auf dem reduzierten Wechselfüllstand für die weitere Produktion mit der Extrusionsvorrichtung. Das bedeutet, dass ab diesem Zeitpunkt nun mit einer geringeren Pufferwirkung der weitere Betriebsprozess durchgeführt wird. Da es sich jedoch um einen Zeitpunkt handelt, bei welchem bereits das Ende des Produktionsauftrages vorherbestimmt ist, ist zu diesem Zeitpunkt üblicherweise auch ein Maschinenbediener am Ort der Produktion. So ist es nicht mehr notwendig, die hohe Pufferwirkung zur Verfügung zu stellen, da nunmehr flexibel und schnell eine Reaktion des Maschinenbedieners in einem Fehlerfall erfolgen kann.

Das Halten des Füllstandes auf dem reduzierten Wechselfüllstand kann dabei schubweise erfolgen. Dies hängt insbesondere von der Art und Weise der Nachförderung ab. So sind sogenannte Batchprozesse bekannt, bei welchen insbesondere schubweise oder kontinuierlich ein Nachfüllen aus einem Vorlagebehälter auf ein Fallrohr oder einen Wiegetrichter erfolgen kann. Auch ist es denkbar, dass mithilfe einer Saugförderung schubweises Nachführen von Einsatzmaterial in die Vorlagevorrichtung zur Verfügung gestellt wird. Bei einem schubweisen Halten des Füllstandes erfolgt also ein Nachfüllschub genau dann, wenn der Füllstand den reduzierten Wechselfüllstand erreicht. Das Halten des Füllstandes ist also insbesondere dahingehend zu verstehen, dass dieser Füllstand den reduzierten Wechselfüllstand nicht oder nur um eine minimale und vordefinierte Menge, von zum Beispiel circa 10 %, unterschreitet.

Das voranstehend beschriebene Verfahren wird durchgeführt, bis der tatsächliche Materialwechsel eingeleitet wird. Darüber hinaus kann auf diese Weise auch eine verlängerte Produktion, sofern dies ein flexibler Wunsch des Maschinenbedieners ist, auch auf Basis dieses Verfahrens mit dem reduzierten Wechselfüllstand durchgeführt werden.

Eine Vorlagevorrichtung kann dabei vorzugsweise als Wägetrichter, Fallrohr und/oder Vorlagebehälter ausgestattet sein, wobei sowohl eine Saugförderung oder eine Batchvorlage für die Nachfüllfunktionalität der Vorlagevorrichtung zur Verfügung gestellt sein kann. Eine Folienmaschine kann sowohl eine Blasfolienherstellung oder auch eine andere Form der Folienherstellung sein, insbesondere eine sogenannte Castfolienherstellung.

Ein erfindungsgemäßes Verfahren bringt mehrere Vorteile mit sich. So ist insbesondere zum Zeitpunkt des Beginns des Materialwechsels die Menge, welche sich an Einsatzmaterial in der jeweiligen Vorlagevorrichtung befindet, mit Bezug auf den reduzierten Wechselfüllstand deutlich verringert. Das bedeutet, dass eine geringere Menge an Einsatzmaterial aus der Vorlagevorrichtung für die Durchführung des Materialwechsels entfernt werden muss. Dies hat insbesondere zwei entscheidende Auswirkungen. Zum einen wird auf diese Weise der Zeitaufwand für das Ablassen des auf diese Weise reduzierten restlichen Einsatzmaterials deutlich reduziert. Für den Fall, dass es sich bei dem abgelassenen Einsatzmaterial um nicht mehr wiederverwertbares Material handelt, wird auf diese Weise gleichzeitig auch der damit entstehende Ausschuss bzw. Abfall deutlich reduziert.

Es ist erfindungswesentlich, wenn bei einem erfindungsgemäßen Verfahren der Füllstand der zumindest einen Vorlagevorrichtung schubweise, in einem einzigen Nachfüllschub, erhöht wird, wenn der Füllstand unter den Wechselfüllstand fällt. Darunter ist zu verstehen, dass gerade keine kontinuierliche Nachförderung stattfindet, sondern vielmehr mithilfe von Nachfüllschüben immer eine definierte Nachfüllmenge in die Vorlagevorrichtung eingebracht wird. So kann beispielsweise eine gemeinsame Saugvorrichtung vorgesehen sein, welche mithilfe eines Unterdrucks und einer einzigen Pumpe für sämtliche Vorlagevorrichtungen Saugschübe zur Verfügung stellt. Somit kann immer eine Vorlagevorrichtung mit einem Nachfüllschub oder mehreren Nachfüllschüben bedient werden. Eine Begrenzung auf insbesondere einen einzigen Nachfüllschub führt dazu, dass die Schwankung vor dem Nachfüllschub und nach dem Nachfüllschub und damit die Amplitude, mit welcher der tatsächliche Füllstand bei der Durchführung eines erfindungsgemäßen Verfahrens schwankt, reduziert wird. Für den Fall, dass der Materialwechsel exakt dann beginnt, wenn gerade ein Nachfüllschub eingebracht worden ist, wird die auf diese Weise maximale abzulassende Menge an Einsatzmaterial deutlich reduziert. Es ergibt sich also ein schwankender Füllstand und gleichzeitig eine entsprechende Kombination aus einem Restpuffer des Einsatzmaterials und dem reduzierten Wechselfüllstand.

Vorteilhaft ist es, wenn bei der Ausführungsform des voranstehenden Absatzes die schubweise Erhöhung des Füllstandes mit einem einzigen Nachfüllschub erfolgt, welcher weniger Einsatzmaterial nachfüllt, als ein Betriebsschub im normalen Produktionsbetrieb der Extrusionsvorrichtung. Das bedeutet, dass im normalen Produktionsbetrieb im Wesentlichen eine komplette Nachfüllung der Vorlagevorrichtung bis zu einem oberen maximalen Füllstand erfolgen soll, um die maximale Pufferwirkung weiter zur Verfügung zu stellen. Für ein erfindungsgemäßes Verfahren als Vorbereitung auf den Materialwechsel kann es nun vorteilhaft sein, diesen Betriebsschub auf einen Nachfüllschub zu reduzieren. Dies wird insbesondere dadurch gewährleistet, dass zum Beispiel bei einer Saugförderanlage die Zeitspanne, über welche angesaugt wird, also die Dauer des Nachfüllschubes im Vergleich zur Dauer des Betriebsschubes reduziert ist. Dies führt dazu, dass bei der schubweisen Erhöhung des Füllstandes nicht nur eine Reduktion der Anzahl der Nachfüllschübe, sondern vielmehr auch eine Reduktion der Menge pro Nachfüllschub erzielbar wird. Damit wird eine noch weiter reduzierte Wechselamplitude zwischen dem realen Füllstand und dem Wechselfüllstand erzielt, so dass darüber hinaus auch mit einer verkürzten Nachfüllzeit für diesen Nachfüllschub gerechnet werden kann. Es erfolgt also eine geringere Blockade für andere Vorlagen, so dass auch auf diese Weise ein geringerer Puffer für die anderen Vorlagevorrichtungen einsetzbar ist.

Ein weiterer Vorteil ist es, wenn bei einem erfindungsgemäßen Verfahren das Volumen und/oder das Gewicht des Einsatzmaterials, welches dem Wechselfüllstand in der Vorlage entspricht, mit dem Volumen und/oder dem Gewicht des Einsatzmaterials eines Nachfüllschubes ein Nachfüllverhältnis zwischen 0,5:1 und 10:1 aufweist. Das bedeutet also, dass eine definierte Vorgabe der Relation zwischen der Nachfüllung und dem Rest an Einsatzmaterial vorgegeben wird. Bevorzugt ist ein Nachfüllverhältnis zwischen 0,5:1 und 5:1, besonders bevorzugt ein Nachfüllverhältnis zwischen 1:1 und 4:1. In Einzelfällen kann es bevorzugt sein, wenn sich das Nachfüllverhältnis im Bereich zwischen 1,5:1 und 2,5:1 bewegt. Insbesondere Bereiche, bei welchen ein geringer Nachfüllschub ausreicht, um eine entsprechende Menge an Einsatzmaterial auf Wechselfüllstand zu halten, sind dabei bevorzugt. So ist zum einen eine absolute Reduktion des Restfüllstandes innerhalb der Vorlagevorrichtung durch den reduzierten Wechselfüllstand vorteilhaft. Zum anderen ist eine Reduktion der zugehörigen Amplitude sinnvoll, um für den negativsten Fall des Materialwechsels, also den Start des Materialwechsels direkt nach einem Nachfüllschub, eine möglichst geringe Überschreitung des Wechselfüllstandes zu erhalten.

Ein weiterer Vorteil kann es sein, wenn bei einem erfindungsgemäßen Verfahren zu einem definierten Zeitpunkt vor dem Ende des Produktionsauftrages ein Minimalfüllstand vorgegeben wird, welcher geringer als der Wechselfüllstand ist, und der Füllstand der zumindest einen Vorlagevorrichtung über dem Minimalfüllstand für die weitere Produktion mit der Extrusionsvorrichtung gehalten wird. Hier handelt es sich also um einen sogenannten zweistufigen Füllstandsprozess. So wird nach der Einleitung eines erfindungsgemäßen Verfahrens überprüft, ob ein Minimalfüllstand sinnvoll sein kann. Dies kann sowohl direkt, also auch indirekt sein. So wird eine Kontrolleinheit manuell oder automatisch in einen erfindungsgemäßen Wechselzustand versetzt und den zugehörigen Wechselfüllstand anfahren. Sobald nun das Bedienpersonal in der Nähe ist und den Beginn des Materialwechsels wünscht, kann die Pufferwirkung innerhalb der jeweiligen Vorlagevorrichtung noch weiter reduziert werden, da der Materialwechsel unmittelbar bevorsteht. So kann eine komponentenspezifische Auswahl sowohl in manueller direkter Weise oder durch definierte Vorgabe in automatischer Weise, zum Beispiel mithilfe eines definierten Zeitpunktes von circa fünf Minuten, erfolgen. Dies führt dazu, dass eine noch weitere Reduktion des Füllstandes auf den Minimalfüllstand erfolgt und die Haltefunktion des Füllstandes für die jeweilige Vorlagevorrichtung nun für diesen Minimalfüllstand durchgeführt wird. Dies ist jedoch nur dann ausreichend sicher, wenn das Bedienpersonal tatsächlich in der Nähe ist und nun die letzte Phase unmittelbar vor dem tatsächlich durchgeführten Materialwechsel vorherrscht.

Ein weiterer Vorteil ist es, wenn bei einem erfindungsgemäßen Verfahren zumindest zwei Vorlagevorrichtungen vorgesehen sind, wobei für jede Vorlagevorrichtung in der Extrusionsvorrichtung ein spezifischer Wechselfüllstand vorgegeben wird. Die jeweilige Vorlagevorrichtung kann auch als Komponente oder Materialkomponente bezeichnet werden. So ist jede Materialkomponente in der jeweiligen Rezeptur spezifisch hinsichtlich der eingesetzten Menge und der damit einhergehenden Fördergeschwindigkeit. Ist beispielsweise in einer Vorlagevorrichtung eine Materialkomponente gelagert, welche nur mit einem ganz geringen Anteil in der gesamten Einsatzrezeptur zum Tragen kommt, so wird die entsprechende Fördergeschwindigkeit für diese Vorlagevorrichtung sehr gering sein. Ist dem entgegengesetzt eine andere Materialkomponente in einer anderen Vorlagevorrichtung mit hohem Volumenanteil eingesetzt, so wird dort eine hohe Fördermenge ein entsprechend schnelles Ausbringen dieses Materials aus der Vorlagevorrichtung zur Verfügung stellen. In Abhängigkeit der unterschiedlichen Ausbringungsgeschwindigkeiten können nun unterschiedliche Wechselfüllstände zur Verfügung gestellt werden. So ist bei einer geringen Ausbringgeschwindigkeit eine ähnliche Pufferwirkung auch mit einem deutlich geringeren Wechselfüllstand erzielbar, als dies bei einer großen Ausbringgeschwindigkeit für eine entsprechend andere Vorlagevorrichtung der Fall ist. Es erfolgt also eine materialspezifische Reduktion der Zeit bzw. des Materials und damit eine Option einer weiteren Optimierung für die Durchführung eines erfindungsgemäßen Verfahrens.

Vorteilhaft ist es ebenfalls, wenn bei einem erfindungsgemäßen Verfahren nach dem Vorausbestimmen des Endes des Produktionsauftrages die Absenkzeit für die zumindest eine Vorlagevorrichtung bestimmt wird, welche für das Absenken des Füllstandes auf den Wechselfüllstand durch die weitere Produktion benötigt wird, und die Vorgabe des reduzierten Wechselfüllstandes erfolgt, wenn die Restzeit bis zum Ende des Produktionsauftrages gleich der Absenkzeit ist. Das bedeutet, dass wenn der Produktionsauftrag hinsichtlich seines Endes vorausbestimmt wird, gleichzeitig vorausbestimmt wird, wie lange das Absenken des Füllstandes dauern wird in Abhängigkeit der tatsächlichen Produktionsparameter. Die Absenkzeit für die jeweilige Vorlagevorrichtung ist dementsprechend länger, wenn die Fördergeschwindigkeit für diese Vorlagevorrichtung gering ist, und kürzer, wenn die Fördergeschwindigkeit für diese Vorlagevorrichtung schnell ist. Sobald die Restzeit bis zum Ende des Produktionsauftrages nun gleich dieser Absenkzeit ist, beginnt die Vorgabe des reduzierten Wechselfüllstandes spezifisch für diese Vorlagevorrichtung. Es ergeben sich also unterschiedlich schnell absinkende Säulen, wobei das Absinken der jeweiligen Säule einer Vorlagevorrichtung zu unterschiedlichen Zeitpunkten beginnen kann. Die Ausführungsbedingung, nämlich dass die Restzeit gleich der Absenkzeit ist, ist selbstverständlich als technisch schwankender Spielraum zu verstehen. So kann eine Toleranz von bis zu ±10 % bei der Auslösung durch die Gleichheit zwischen Absenkzeit und Restzeit möglich sein. Selbstverständlich können auch Restpuffer vorgesehen sein, so dass zum Beispiel fünf Minuten vor oder auch nach dem Ende eines entsprechenden Produktionsauftrages alle Vorlagevorrichtungen auf dem gewünschten Wechselfüllstand und damit im Vorbereitungsbetrieb sind.

Vorteilhaft ist es weiter, wenn bei einem erfindungsgemäßen Verfahren für das Halten des Füllstandes ein Füllstandssignal durch eine Kontrollvorrichtung empfangen wird, welches insbesondere wenigstens eine der folgenden Informationen enthält:
- Gewicht eines zumindest teilweise gefüllten Wägetrichters der zumindest einen Vorlagevorrichtung
- Füllstand in einem Wägetrichter der zumindest einen Vorlagevorrichtung
- Füllstand in einem Fallrohr der zumindest einen Vorlagevorrichtung
- Füllstand in einem Vorlagebehälter der zumindest einen Vorlagevorrichtung

Bei der voranstehenden Aufzählung handelt es sich um eine nicht abschließende Liste. Selbstverständlich kann ein Füllstandssignal durch eine Kontrollvorrichtung empfangen werden und auch zwei oder mehr Informationen aufweisen. So sind unterschiedliche Signale bzw. unterschiedliche Sensoren denkbar, welche die gewünschten Signale zur Verfügung stellen.

Ebenfalls Gegenstand der vorliegenden Erfindung ist eine Extrusionsvorrichtung mit einem Extruder und zumindest einer Vorlagevorrichtung zur Vorlage von Einsatzmaterial für den Extruder. Eine solche Extrusionsvorrichtung weist einen Füllstandssensor für die Bestimmung des Füllstandes in der zumindest einen Vorlagevorrichtung auf. Weiter ist eine Kontrollvorrichtung für ein Vorausbestimmen eines Endes eines Produktionsauftrages einer Extrusionsvorrichtung, ein Vorgeben eines reduzierten Wechselfüllstandes für die zumindest eine Vorlagevorrichtung und ein Halten des Füllstandes der zumindest einen Vorlagevorrichtung auf dem reduzierten Wechselfüllstand für die weitere Produktion mit der Extrusionsvorrichtung vorgesehen. Vorteilhaft ist es, wenn die Kontrollvorrichtung ausgebildet ist für die Ausführung eines erfindungsgemäßen Verfahrens. Damit bringt eine erfindungsgemäße Extrusionsvorrichtung die gleichen Vorteile mit sich, wie sie ausführlich mit Bezug auf ein erfindungsgemäßes Verfahren erläutert worden sind.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und der Beschreibung erwähnten Merkmale jeweils einzeln für sich oder in beliebiger Kombination erfindungswesentlich sein. Es zeigen schematisch:
- Fig. 1: eine Ausführungsform einer erfindungsgemäßen Extrusionsvorrichtung,
- Fig. 2: die Ausführungsform der Fig. 1 beim Absenken der Füllstände,
- Fig. 3: die Ausführungsform der Fig. 1 und 2 mit Füllständen auf Wechselfüllstandsniveau,
- Fig. 4: die Ausführungsform der Fig. 1 bis 3 während eines Nachfüllschubes,
- Fig. 5: die Ausführungsform der Fig. 1 bis 4 während eines Minimalfüllstands
- Fig. 6: der Füllstandsverlauf in schematischer Darstellung und
- Fig. 7: eine alternative Ausführungsform einer Extrusionsvorrichtung.

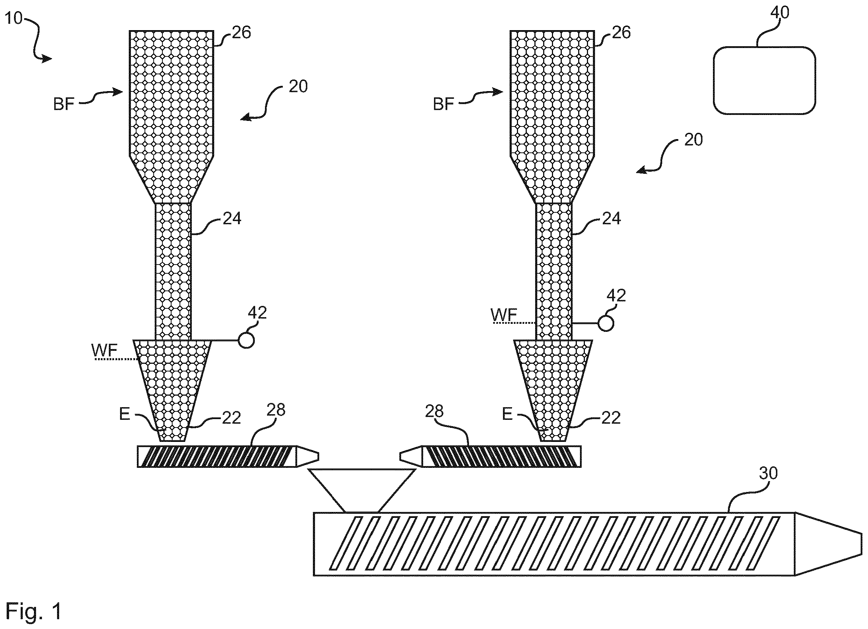

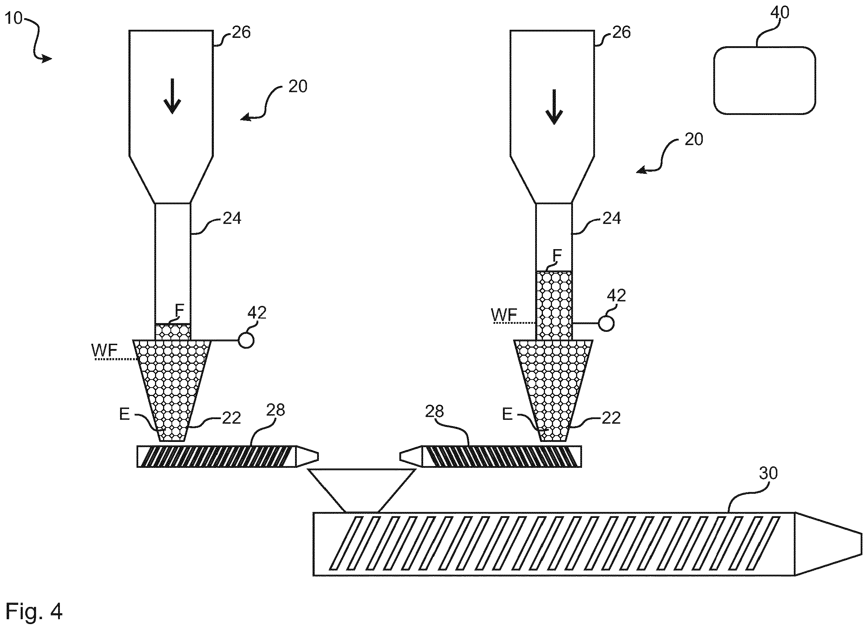

Anhand der Fig. 1 bis 5 wird eine erfindungsgemäße Extrusionsvorrichtung 10 näher erläutert. Diese ist bei dieser Ausführungsform schematisch und beispielhaft mit zwei Vorlagevorrichtungen 20 ausgestattet. Jede dieser Vorlagevorrichtungen 20 weist einen Vorlagebehälter 26, ein Fallrohr 24 und einen Wägetrichter 22 auf. In dem normalen Betriebsmodus ist hier die jeweilige Vorlagevorrichtung 20 vollständig mit Einsatzmaterial E gefüllt, so dass die Fig. 1 im Wesentlichen einen Betriebsfüllstand BF für das Einsatzmaterial E darstellt.

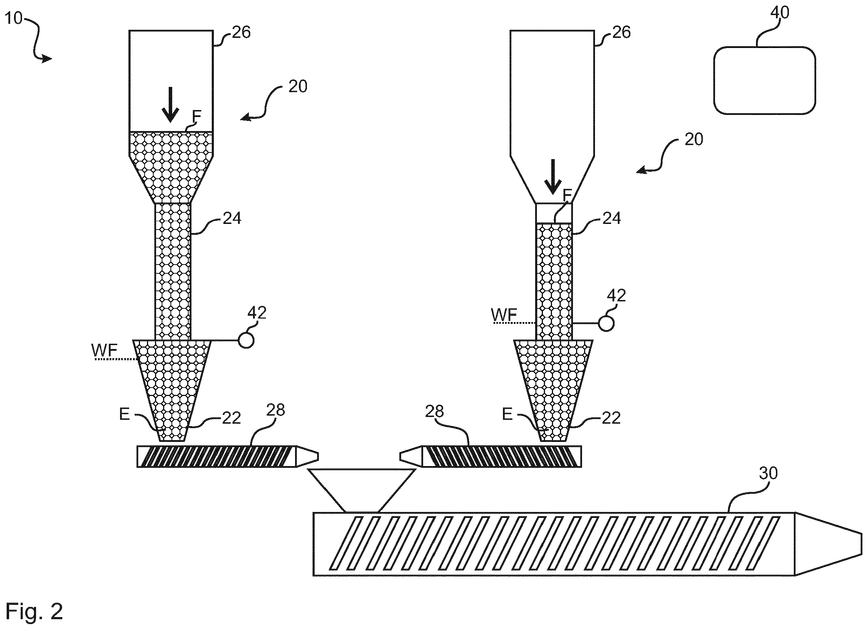

Sobald eine Materialwechselanforderung erkannt wird, kann eine Kontrollvorrichtung 40 ein entsprechendes erfindungsgemäßes Verfahren ausführen. Dies führt dazu, dass nun das Produktionsende vorausbestimmt wird und anhand der Vorausbestimmung insbesondere in Korrelation mit einer Absenkzeit AZ und einer Restzeit RZ für das Produktionsende ein entsprechendes Absenken der einzelnen Füllstände F in den Vorlagevorrichtungen 20 durchgeführt wird. Eine Momentaufnahme während dieser absinkenden Füllstände F ist in Fig. 2 näher dargestellt.

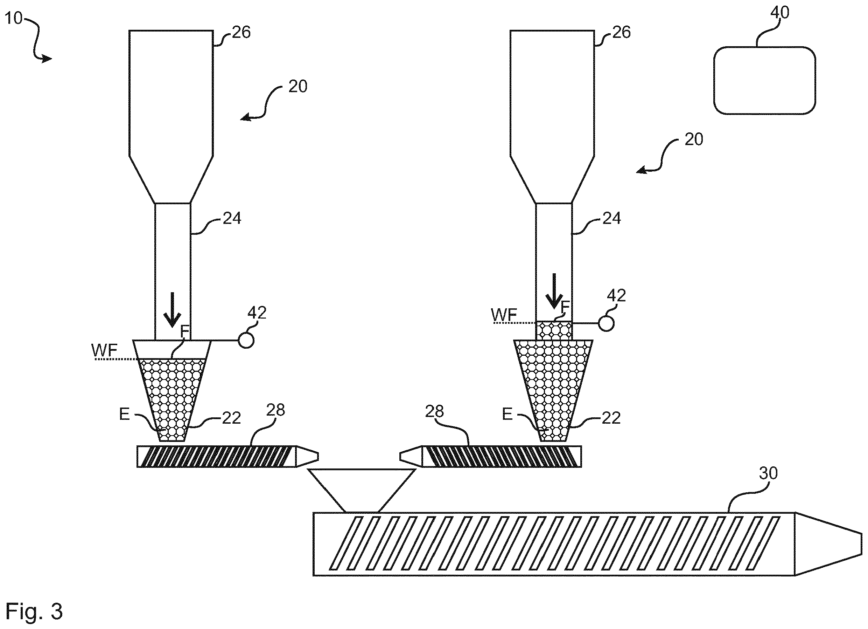

Das Absenken der Füllstände F wird beendet, wenn die Situation gemäß Fig. 3 erreicht ist. Um diese Situation zu erkennen, sind hier Füllstandsensoren 42 vorgesehen. Bei der rechten Vorlagevorrichtung 20 ist dieser Füllstandssensor 42 als induktiver Sensor ausgebildet, welcher exakt einen Füllstand erkennen kann. Dadurch, dass bei der linken und rechten Vorlagevorrichtung 20 jeweils ein Wägetrichter 22 vorgesehen ist, kann bei der linken Vorlagevorrichtung 20 nun auch ein Füllstandssensor 42 mit dieser Wägesystematik gekoppelt sein. So kann hier über eine Gewichtsauswertung ein weiterer Wechselfüllstand WF vorgegeben werden. Sobald nun der jeweilige Füllstand F den zugehörigen Wechselfüllstand WF erreicht hat, wird die Kontrollvorrichtung 40 den Wechselfüllstand WF versuchen zu halten. Ein Unterschreiten soll dabei vermieden werden bzw. eine maximale Unterschreitung von circa 10 % beibehalten werden. So wird zu dem Zeitpunkt, wie die Fig. 3 ihn zeigt, nun ein Nachfüllen innerhalb der Vorlagevorrichtungen 20 erfolgen. Dies erfolgt insbesondere schubweise, zum Beispiel mithilfe eines einzigen Nachfüllschubes. Dadurch steigt der Füllstand F in den beiden Vorlagevorrichtungen 20 nun wieder deutlich über den Wechselfüllstand WF an. Diese Situation wird solange gehalten, bis der Materialwechsel nun tatsächlich durchgeführt wird.

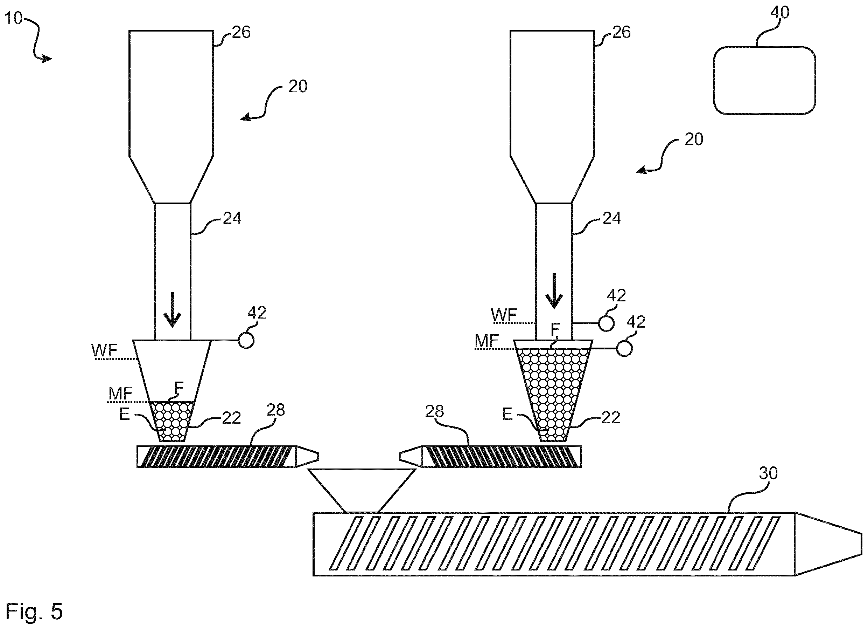

Fig. 5 zeigt, dass insbesondere auf Basis einer manuellen Eingabe eines Maschinenbedieners, nun auch eine weitere Reduktion und damit eine zweite Reduktion des Füllstands F erfolgen kann. So wird hier ein Minimalfüllstand MF angegeben, so dass eine noch weitere Reduktion des Einsatzmaterials E erfolgt, welches in der jeweiligen Vorlagevorrichtung 20 verbleibt. Wie den Fig. 1 bis 5 zu entnehmen ist, erfolgt damit eine Reduktion der Restmenge des Einsatzmaterials E, welche beim durchzuführenden Materialwechsel berücksichtigt werden muss. Somit wird zum einen der Ausschuss reduziert bzw. der Abfall an abgelassenem Restmaterial des Einsatzmaterials E. Zum anderen wird die Zeitdauer, welche für das Ablassen des restlichen Einsatzmaterials E aus der jeweiligen Vorlagevorrichtung 20 notwendig ist, deutlich reduziert.

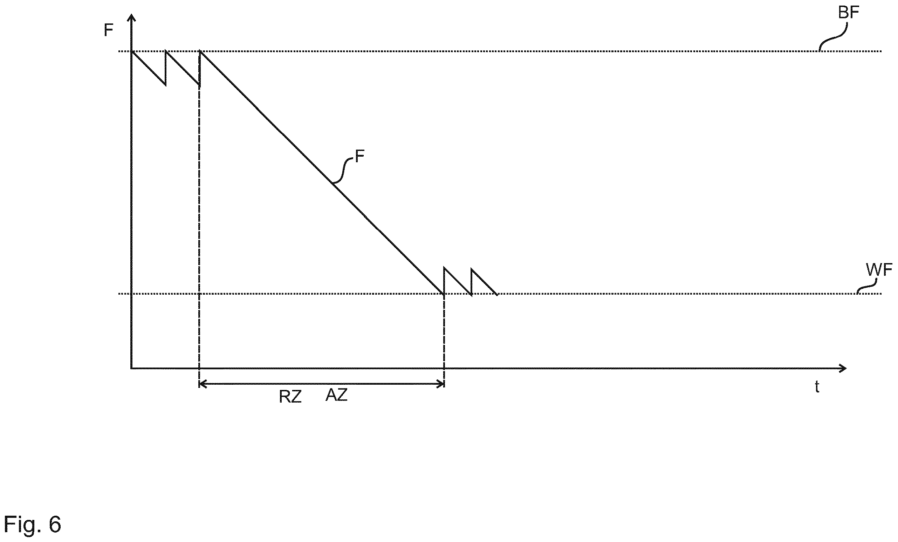

Die Fig. 6 zeigt schematisch, wie ein Füllstand F über die Zeit sich entwickeln kann. So beginnt links oben der Füllstand F auf einen Betriebsfüllstand BF und damit vollgefüllter Vorlagevorrichtungen 20. Auch hier sinkt während des Produktionsverlaufs der Füllstand F ab, wobei jedoch ein Nachfüllschub immer wieder ein Auffüllen auf den Betriebsfüllstand BF erwirkt. Dies führt zu einer entsprechenden Sägezahncharakteristik links oben in Fig. 6. Sobald eine Vorausbestimmung des Produktionsendes erfolgt ist, kann das erfindungsgemäße Verfahren einsetzen, so dass nun der Füllstand F absinkt. Dabei ist insbesondere eine entsprechende Zeitdauer als Absenkzeit AZ zu berücksichtigen, welche bei dieser Ausführungsform gleich oder im Wesentlichen gleich der Restzeit RZ bis zum Ende des Produktionsauftrages ist. Sobald nun der Füllstand F den Wechselfüllstand WF erreicht hat, wird ein Unterschreiten dieses Wechselfüllstandes WF durch einen Nachfüllschub vermieden. In dieser Situation wird die Anlage gehalten, so dass sich nun rechts unten ebenfalls ein Sägezahnprofil ausbildet, welches ein Unterschreiten des Wechselfüllstandes WF durch den Füllstand F vermeidet oder auf ein Minimum reduziert.

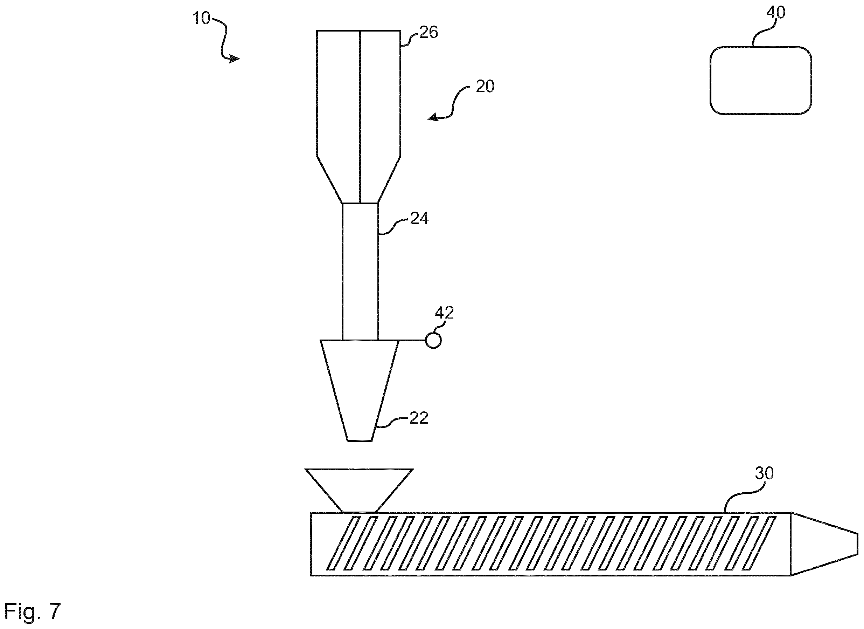

Die Fig. 7 zeigt eine alternative Ausführungsform einer Extrusionsvorrichtung 10. Diese basiert hinsichtlich der erfindungsgemäß beschriebenen Vorteile auf der Ausführungsform der Fig. 1, unterscheidet sich jedoch durch die Nachfüllfunktion. So ist hier ein sogenannter Batch-Prozess für das Nachfüllen vorgesehen. Der Vorlagebehälter 26 ist mit getrennten Volumina ausgestattet, so dass jedes Volumina des Vorlagebehälters 26 als eine Vorlagevorrichtung 20 verstanden werden kann. Darunter angeordnete Bauteile in Form des Fallrohrs 24 und des Wägetrichters 22 sind somit gemeinsame Bauteile der unterschiedlichen Vorlagevorrichtungen 20. Unterhalb des Wägetrichters 22 ist ein Mischtrichter, insbesondere mit einem Mischerantrieb, vorgesehen, welcher eine Homogenisierung vor dem Eintritt in den Extruder erlaubt.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 10: Extrusionsvorrichtung
- 20: Vorlagevorrichtung
- 22: Wägetrichter
- 24: Fallrohr
- 26: Vorlagebehälter
- 28: Dosierschnecke
- 30: Extruder
- 40: Kontrollvorrichtung
- 42: Füllstandssensor

- E: Einsatzmaterial
- BF: Betriebsfüllstand
- WF: Wechselfüllstand
- MF: Minimalfüllstand
- F: Füllstand
- AZ: Absenkzeit
- RZ: Restzeit
- t: Zeit

## Patentansprüche

1. Verfahren für die Vorbereitung eines Materialwechsels bei einer Extrusionsvorrichtung (10) für eine Folienmaschine mit zumindest einer Vorlagevorrichtung (20) zur Vorlage von Einsatzmaterial (E) für einen Extruder (30), aufweisend die folgenden Schritte:
- Vorausbestimmen eines Endes eines Produktionsauftrages einer Extrusionsvorrichtung (10),
- Vorgeben eines reduzierten Wechselfüllstandes (WF) für die zumindest eine Vorlagevorrichtung (20),
- Halten des Füllstandes (F) der zumindest einen Vorlagevorrichtung (20) auf dem reduzierten Wechselfüllstand (WF) für die weitere Produktion mit der Extrusionsvorrichtung (10) wobei der Füllstand (F) der zumindest einen Vorlagevorrichtung (20) schubweise in einem einzigen Nachfüllschub erhöht wird, wenn der Füllstand (F) unter den Wechselfüllstand (WF) fällt, wobei eine definierte Nachfüllmenge in die Vorlagevorrichtung (20) eingebracht wird.

2. Verfahren nach Anspruch 1,
**dadurch gekennzeichnet,**
**dass** die schubweise Erhöhung des Füllstandes (F) mit einem einzigen Nachfüllschub erfolgt, welcher weniger Einsatzmaterial (E) nachfüllt, als ein Betriebsschub in normalen Produktionsbetrieb der Extrusionsvorrichtung (10).

3. Verfahren nach einem der Ansprüche 1 oder 2,
**dadurch gekennzeichnet,**
**dass** das Volumen und/oder das Gewicht an Einsatzmaterial (E), welches dem Wechselfüllstand (WF) in der Vorlagevorrichtung (20) entspricht, mit dem Volumen und/oder dem Gewicht des Einsatzmaterials (E) eines Nachfüllschubes ein Nachfüllverhältnis zwischen 1:1 und 2:1 aufweist.

4. Verfahren nach einem der vorangegangenen Ansprüche,
**dadurch gekennzeichnet,**
**dass** zu einem definierten Zeitpunkt vor dem Ende des Produktionsauftrages ein Minimalfüllstand (MF) vorgeben wird, welcher geringer als der Wechselfüllstand (WF) ist, und der Füllstand (F) der zumindest einen Vorlagevorrichtung (20) über dem Minimalfüllstand (MF) für die weitere Produktion mit der Extrusionsvorrichtung (10) gehalten wird.

5. Verfahren nach einem der vorangegangenen Ansprüche,
**dadurch gekennzeichnet,**
**dass** zumindest zwei Vorlagevorrichtungen (20) vorgesehen sind, wobei für jede Vorlagevorrichtung (20) der Extrusionsvorrichtung (10) ein spezifischer Wechselfüllstand (WF) vorgeben wird.

6. Verfahren nach einem der vorangegangenen Ansprüche,
**dadurch gekennzeichnet,**
**dass** nach dem Vorausbestimmen des Endes des Produktionsauftrages die Absenkzeit (AZ) für die zumindest eine Vorlagevorrichtung (20) bestimmt wird, welche für das Absenken des Füllstandes (F) auf den Wechselfüllstand (WF) durch die weitere Produktion benötigt wird, und die Vorgabe des reduzierten Wechselfüllstandes (WF) erfolgt, wenn die Restzeit (RZ) bis zum Ende des Produktionsauftrages gleich der Absenkzeit (AZ) ist.

7. Verfahren nach einem der vorangegangenen Ansprüche,
**dadurch gekennzeichnet,**
**dass** für das Halten des Füllstands (F) ein Füllstandssignal durch eine Kontrollvorrichtung (40) empfangen wird, welches insbesondere wenigstens eine der folgenden Informationen erhält:
- Gewicht eines zumindest teilweise gefüllten Wägetrichters (22) der zumindest einen Vorlagevorrichtung (20)
- Füllstand (F) in einem Wägetrichter (22) der zumindest einen Vorlagevorrichtung (20)
- Füllstand (F) in einem Fallrohr (24) der zumindest einen Vorlagevorrichtung (20)
- Füllstand (F) in einem Vorlagebehälter (26) der zumindest einen Vorlagevorrichtung (20)

8. Extrusionsvorrichtung (10) mit einem Extruder (30) und zumindest einer Vorlagevorrichtung (20) zur Vorlage von Einsatzmaterial (E) für den Extruder (30), aufweisend einen Füllstandssensor (42), welcher den Füllstand (F) in der zumindest einen Vorlagevorrichtung (20) bestimmt und eine Kontrollvorrichtung (40), welche ein Ende eines Produktionsauftrages einer Extrusionsvorrichtung (10) vorausbestimmt, ein Vorgeben eines reduzierten Wechselfüllstandes (WF) für die zumindest eine Vorlagevorrichtung (20) und ein Halten des Füllstandes (F) der zumindest einen Vorlagevorrichtung (20) auf dem reduzierten Wechselfüllstand (WF) für die weitere Produktion mit der Extrusionsvorrichtung (10) wobei der Füllstand (F) der zumindest einen Vorlagevorrichtung (20) schubweise in einem einzigen Nachfüllschub erhöht ist, wenn der Füllstand (F) unter den Wechselfüllstand (WV) fällt, wobei eine definierte Nachfüllmenge in die Vorlagevorrichtung (20) eingebracht ist.

9. Extrusionsvorrichtung (10) nach Anspruch 8,
**dadurch gekennzeichnet,**
**dass** die Kontrollvorrichtung (40) ausgebildet ist für die Ausführung eines Verfahrens mit den Merkmalen eines der Ansprüche 1 bis 7.

## Claims

1. A method for preparing a change of material in an extrusion device (10) for a film machine having at least one feed device (20) for feeding a feed material (E) for an extruder (30), having the following steps:
- predetermining an end of a production order of an extrusion device (10),
- specifying a reduced changing filling level (WF) for the at least one feed device (20),
- maintaining the filling level (F) of the at least one feed device (20) at the reduced changing filling level (WF) for the further production with the extrusion device (10), wherein the filling level (F) of the at least one feed device (20) is increased in batches in a single refill thrust, when the filling level (F) falls below the changing filling level (WF), wherein a defined refill quantity is introduced into the feed device (20).

2. The method according to claim 1,
**characterized in**
**that** the increase of the filling level (F) takes place in batches with a single refill thrust, which refills less feed material (E) than an operating thrust in normal production operation of the extrusion device (10).

3. The method according to any one of claims 1 or 2,
**characterized in**
**that** the volume and/or the weight of feed material (E), which corresponds to the changing filling level (WF) in the feed device (20), has a refill ratio of between 1:1 and 2:1 to the volume and/or the weight of the feed material (E) of a refill thrust.

4. The method according to any one of the preceding claims,
**characterized in**
**that** at a defined point in time before the end of the production order, a minimum filling level (MF) is specified, which is lower than the changing filling level (WF) , and the filling level (F) of the at least one feed device (20) is maintained via the minimum filling level (MF) for further production with the extrusion device (10).

5. The method according to any one of the preceding claims,
**characterized in**
**that** at least two feed devices (20) are provided, wherein a specific changing filling level (WF) is specified for each feed device (20) of the extrusion device (10).

6. The method according to any one of the preceding claims,
**characterized in**
**that** after the predetermination of the end of the production order, the lowering time (AZ) for the at least one feed device (20) is determined, which is required for the lowering of the filling level (F) to the changing filling level (WF) by the further production, and the specification of the reduced changing filling level (WF) takes place, when the remaining time (RZ) up to the end of the production order is equal to the lowering time (AZ).

7. The method according to any one of the preceding claims,
**characterized in**
**that** a filling level signal is received by a control device (40) for maintaining the filling level (F), which control device in particular receives at least one of the following pieces of information:
- weight of an at least partially filled weighing funnel (22) of the at least one feed device (20)
- filling level (F) in a weighing funnel (22) of the at least one feed device (20)
- filling level (F) in a downspout (24) of the at least one feed device (20)
- filling level (F) in a feed container (26) of the at least one feed device (20)

8. An extrusion device (10) with an extruder (30) and at least one feed device (20) for feeding feed material (E) for the extruder (30) comprising a filling level sensor (42), which determines the filling level (F) in the at least one feed device (20) and a control device (40), which predetermines an end of a production order of a extrusion device (10), a specification of a reduced changing filling level (WF) for the at least one feed device (20) and a maintenance of the filling level (F) of the at least one feed device (20) at the reduced changing filling level (WF) for further production with the extrusion device (10), wherein the filling level (F) of the at least one feed device (20) is increased in batches in a single refill thrust, if the filling level (F) falls below the changing filling level (WV), wherein a defined refill quantity is introduced into the feed device (20).

9. The extrusion device (10) according to claim 8,
**characterized in**
**that** the control device (40) is designed for carrying out a method having the features of any one of claims 1 to 7.

## Revendications

1. Procédé pour la préparation d'un changement de matériau dans un dispositif d'extrusion (10) pour une machine à film avec au moins un dispositif de présentation (20) pour la présentation d'une charge (E) pour une extrudeuse (30), comprenant les étapes suivantes :
- détermination à l'avance d'une fin d'une tâche de production d'un dispositif d'extrusion (10),
- définition d'un niveau de remplissage de changement (WF) réduit pour l'au moins un dispositif de présentation (20),
- maintien du niveau de remplissage (F) de l'au moins un dispositif de présentation (20) au niveau de remplissage de changement (WF) réduit pour la production suivante avec le dispositif d'extrusion (10), dans lequel le niveau de remplissage (F) de l'au moins un dispositif de présentation (20) est augmentée par à-coups dans une seule poussée de remplissage lorsque le niveau de remplissage (F) tombe en dessous du niveau de remplissage de changement (WF), dans lequel une quantité de remplissage définie est introduite dans le dispositif de présentation (20).

2. Procédé selon la revendication 1,
**caractérisé en ce que**
l'augmentation par à-coups du niveau de remplissage (F) a lieu avec une seule poussée de remplissage, qui introduit moins de charge (E) qu'une poussée dans le fonctionnement normal de production du dispositif d'extrusion (10).

3. Procédé selon la revendication 1 ou 2,
**caractérisé en ce que**
le volume et/ou le poids de charge (E) qui correspond au niveau de remplissage de changement (WF) dans le dispositif de présentation (20), présente, avec le volume et/ouy le poids de la charge (E) d'une poussée de remplissage, un rapport de remplissage entre 1:1 et 2:1.

4. Procédé selon l'une des revendications précédentes,
**caractérisé en ce que**
à un moment défini avant la fin de la tâche de production, d'un niveau de remplissage minimal (MF) est prédéterminé, qui est inférieur au niveau de remplissage de changement (WF) et le niveau de remplissage (F) de l'au moins un dispositif de présentation (20) est maintenu au-dessus du niveau de remplissage minimal (MF) pour la production suivante avec le dispositif d'extrusion (10).

5. Procédé selon l'une des revendications précédentes,
**caractérisé en ce que**
au moins deux dispositifs de présentation (20) sont prévus, dans lequel, pour chaque dispositif de présentation (20) du dispositif d'extrusion (10), un niveau de remplissage de changement (WF) spécifique est prédéterminé.

6. Procédé selon l'une des revendications précédentes,
**caractérisé en ce que**
après la détermination à l'avance de la fin de la tâche de production, le temps de diminution (AZ) pour l'au moins un dispositif de présentation (20) est déterminé, qui est nécessaire pour la diminution du niveau de remplissage (F) jusqu'au niveau de remplissage de changement (WF) par la production suivante et la prédétermination du niveau de remplissage de changement (WF) a lieu lorsque le temps restant (RZ) jusqu'à la fin de la tâche de production est égal au temps de diminution (AZ).

7. Procédé selon l'une des revendications précédentes,
**caractérisé en ce que**
pour le maintien du niveau de remplissage (F), un signal de niveau de remplissage est reçu par un dispositif de contrôle (40), qui obtient plus particulièrement au moins une des informations suivantes :
- poids d'une trémie de pesage (22), remplie au moins partiellement, d'un dispositif de présentation (20),
- niveau de remplissage (F) dans une trémie de pesage (22) de l'au moins un dispositif de présentation (20),
- niveau de remplissage (F) dans un tuyau de descente (24) de l'au moins un dispositif de présentation (20),
- niveau de remplissage (F) dans un récipient de présentation (26) de l'au moins un dispositif de présentation (20).

8. Dispositif d'extrusion (10) avec une extrudeuse (30) et au moins un dispositif de présentation (20) pour la présentation d'une charge (E) pour l'extrudeuse (30), comprenant un capteur de niveau de remplissage (42), qui détermine le niveau de remplissage (F) dans l'au moins un dispositif de présentation (20), et un dispositif de contrôle (40), qui détermine à l'avance une fin d'une tâche de production d'un dispositif d'extrusion (10), une prédétermination d'un niveau de remplissage de changement (WF) réduit pour l'au moins un dispositif de présentation (20) et un maintien du niveau de remplissage (F) de l'au moins un dispositif de présentation (20) au niveau de remplissage (WF) réduit pour la production suivante avec le dispositif d'extrusion (10), dans lequel le niveau de remplissage (F) de l'au moins un dispositif de présentation (20) est augmentée par à-coups en une seule poussée de remplissage, lorsque le niveau de remplissage (F) tombe en dessous du niveau de remplissage de changement (WV), dans lequel une quantité de remplissage définie est introduite dans le dispositif de présentation (20).

9. Dispositif d'extrusion (10) selon la revendication 8,
**caractérisé en ce que**
le dispositif de contrôle (40) est conçu pour l'exécution d'un procédé avec les caractéristiques d'une des revendications 1 à 7.
